# EUROPÄISCHE PATENTSCHRIFT

(11) **EP 3 658 640 B1**
(45) Veröffentlichungstag und Bekanntmachung des Hinweises auf die Patenterteilung: **18.02.2026**
(21) Anmeldenummer: 17745183.8
(22) Anmeldetag: 27.07.2017
(51) Int. Cl.: C09J 7/29, B60R 16/02

(54) **KLEBEBAND MIT EINER INSBESONDERE NANOPARTIKEL ENTHALTENDEN KLEBSTOFFGRUNDIERUNGSSCHICHT**
ADHESIVE TAPE HAVING AN ADHESIVE PRIMER LAYER CONTAINING IN PARTICULAR NANOPARTICLES
RUBAN ADHÉSIF MUNI D'UNE COUCHE DE BASE ADHÉSIVE CONTENANT NOTAMMENT DES NANOPARTICULES

(43) Veröffentlichungstag der Anmeldung: 03.06.2020
(73) Patentinhaber: Coroplast Fritz Müller GmbH & Co. KG, 42279 Wuppertal (DE)
(72) Erfinder: RÖNISCH, Ralf, 42349 Wuppertal (DE); VORWERK, Guido, 48231 Warendorf (DE)
(74) Vertreter: Dr. Solf & Zapf Patent- und Rechtsanwalts PartG mbB
(86) Internationale Anmeldenummer: PCT/EP2017/069056
(87) Internationale Veröffentlichungsnummer: WO 2019/020187

(56) Entgegenhaltungen:
- EP-A1- 1 652 900
- EP-A1- 2 045 303
- WO-A1-2006/008120
- WO-A1-2012/122206
- DE-A1- 102009 015 233
- US-A1- 2004 038 026

## Beschreibung

Die vorliegende Erfindung betrifft ein Klebeband, insbesondere ein Kabelwickelband, mit einem Träger, der mindestens auf einer Seite mit einer selbstklebenden Klebstoffschicht versehen ist, die aus einem druckempfindlichen Haftkleber besteht.

Klebebänder der genannten Art sind aus der EP 1 074 595 A1 sowie auch aus der EP 1 448 744 A1 bekannt.

Die EP 1 074 595 A1 beschreibt ein Klebeband mit einem gewebten Träger, dessen Fäden maßgeblich aus Polyesterfasern bestehen, und von denen sich die einen in Längsrichtung des Bandes und die anderen sich quer dazu erstrecken. Eine Klebstoffschicht bedeckt mindestens eine Seite des Trägers. Der Titer der Längsfäden pro Breiteneinheit des Bandes ist kleiner als der Titer der Querfäden pro Längeneinheit des Bandes und höchstens gleich 2.500 dtex/cm. Der Träger weist zwischen 30 und 50 Längsfäden pro Zentimeter Breite und zwischen 18 und 27 Querfäden pro Zentimeter Länge auf, wobei die Längsfäden in Querrichtung durch den Klebstoff an ihrem Platz festgelegt sind, so dass das Band eine Reißfestigkeit in Querrichtung von weniger als 10 N aufweist.

Die EP 1 448 744 A1 beschreibt ein Klebeband mit einem bandförmigen Träger und mit einer ein- und/oder beidseitig auf den Träger aufgebrachten Klebebeschichtung. Das Spezifikum dieses bekannten Klebebandes besteht dabei darin, dass der Träger zumindest bereichsweise ein- und/oder beidseitig eine glattgeschliffene Oberfläche aufweist.

Weitere auf dem Markt befindliche Klebebänder der eingangs genannten Art, insbesondere auch mit einem textilen Vliesträger, sind - einschließlich ihrer Struktur und Eigenschaften - als Standard-Vergleichsmaterialien im Weiteren noch beschrieben.

Die EP 2 045 303 A1 offenbart Klebebänder mit einem gewebten Polyterephthalatträger, die ein Polymercoating und ein Klebstoffcoating aufweisen.

Im Rahmen der WO 2012 / 122 206 A1 wurden Schutzfilme beschrieben, die einen Plastikfilm aufweisen, dessen Oberfläche mit einer Beschichtung ausgestattet ist, die ein antimikrobielles Mittel und nanoskalige Partikel enthält.

Aus der WO 2006 / 008 120 A1 sind wässrige Bindemitteldispersionen bekannt, die anorganische Nanopartikel enthalten.

Die DE 10 2009 015 233 A1 beschreibt ein Verfahren zur Herstellung eines geschäumten Massesystems, enthaltend thermisch empfindliche Substanzen, das als Selbstklebemasse oder als Trägerschicht für ein Klebeband verwendet werden kann.

Die Schaffung derartiger und anderer Klebebänder hat dazu beigetragen, dass der Anteil von Klebebändern im Bereich der Kabelkonfektionierung in den letzten Jahren auf Kosten alternativer Kabelschutzsysteme zugenommen hat. Eine der Ursachen für diesen Trend liegt in der Tatsache begründet, dass Klebebänder neben der reinen Bündelung von Kabeln mehr und mehr zusätzliche Schutzfunktionen im Kabelsatz übernehmen. Neben der Medien- und Temperaturstabilität sind hier vor allem die Geräuschdämpfung und die Abriebfestigkeit zu nennen. Durch die Wahl geeigneter Trägermaterialien und Klebstoffe sind Klebebänder in der Lage, herkömmlich eingesetzte Rillrohre und Schläuche bezüglich dieser Eigenschaften nicht nur zu ersetzen, sondern sogar zu übertreffen. Darüber hinaus sind durch den Ersatz von mehreren vorab abzulängenden Rohren und Schläuchen verschiedener Durchmesser, wie sie für individuelle Bereiche im Kabelsatz benötigt werden, durch nur eine Klebebandrolle Vorteile bei der Lagerhaltung und eine geringere Komplexität zu erzielen.

Klebebänder der genannten Art müssen hinsichtlich ihrer Gebrauchseigenschaften einheitliche Standards, insbesondere die Norm LV 312 (10/2009), erfüllen. Diese Norm klassifiziert Klebebänder im Hinblick auf ihre Eigenschaften für Anwendungen in der Automobilindustrie, vorzugsweise zum Bündeln und Umwickeln von Leitungen und Leitungssätzen. Die genannte Norm wurde von den Vertretern der Automobilhersteller AUDI AG, BMW AG, Daimler AG, Porsche AG und Volkswagen AG erarbeitet. Wenn nachfolgend diese Norm LV 312 oder andere Normen erwähnt werden, sind immer die zum Anmeldezeitpunkt gültigen Ausgaben gemeint.

Entsprechend den oben genannten Dokumenten zum Stand der Technik kann eine hohe Abriebfestigkeit textiler Klebebänder durch den Einsatz von speziellen Kunstfasern erreicht werden. Bevorzugt werden Polyester-, insbesondere PET-(Polyethylenterephthalat-)Fasern, gewählt, die nach der Klassifizierung gemäß der LV 312 je nach Konstruktion der Gewebe, Gewirke oder Vliese einen hohen Abriebschutz, insbesondere der Klasse D, ermöglichen können.

Die Abriebbeständigkeit wird dabei gemäß der LV 312 in Anlehnung an die DIN ISO 6722 bestimmt, indem das Klebeband zunächst auf einen Dorn (Metallstab) mit 5 mm Durchmesser aufgeklebt wird. Mit einem Schabwerkzeug, das einen Nadeldurchmesser von 0,45 mm aufweist, wird dann unter einer Gewichtskraft von 7 N die Anzahl der Hübe bestimmt, die benötigt wird, um das Klebeband durchzuscheuern. Hinsichtlich der Abriebbeständigkeit ist dabei in der LV 312 die in der nachstehenden Tabelle 1 wiedergegebene Klassifizierung vorgesehen.

**Tabelle 1: Einteilung der Abriebklassen nach LV 312**

| Abriebklasse | | Anforderung am 5 mm Dorn |
|---|---|---|
| A | kein Abriebschutz | < 100 Hübe |
| B | geringer Abriebschutz | 100 - 499 Hübe |
| C | mittlerer Abriebschutz | 500 - 999 Hübe |
| D | hoher Abriebschutz | 1000 - 4999 Hübe |
| E | sehr hoher Abriebschutz | ≥ 5000 - 14999 Hübe |
| F | extrem hoher Abriebschutz | ≥ 15.000 Hübe |

Noch bessere Resultate als Klasse D können mit den bekannten Klebebändern entweder durch Kombinationen verschiedener Schichten in den Trägermaterialien oder durch Hochtechnologiefasern, wie aus Aramid, erreicht werden. Eine dieser bekannten Aramidfasern besteht aus Poly(p-phenylenterephthalamid) (PPTA) und ist unter dem Markennamen Kevlar^{®} im Handel erhältlich. Allerdings sind derartige technische Ausführungen aufgrund der aufwändigeren Herstellung der Hochtechnologiefasern deutlich teurer als die klassischen PET-Gewebekonstruktionen.

Durch die Verwendung von mehreren Trägerschichten, insbesondere aus unterschiedlichen Fasern bzw. textilen Gebilden, werden die Dicke und das spezifische Flächengewicht des Klebebands erhöht, was die Verarbeitbarkeit erschweren und negativen Einfluss auf das Abflaggverhalten haben kann. Unter Abflaggverhalten - auch Flagging genannt - wird im Klebebandbereich allgemein verstanden, dass ein Bandende die Neigung haben kann, sich von einer Wicklung abzulösen und abzustehen. Dies ist auf ein Zusammenwirken der durch den Klebstoff bewirkten Haltekraft, der Steifigkeit des Trägers und der Geometrie des zu umwickelnden Gegenstands, beispielsweise des Durchmessers eines zu umwickelnden Kabelsatzes, zurückzuführen. In der Praxis dürfen Klebebandenden sich nicht selbsttätig ablösen. Die Bestimmung des Flaggings erfolgt gemäß der Norm LV 312 durch Bestimmung des Ablöseverhaltens eines schraubenförmig mit definierter Leitungsanzahl um einen Kabelsatz gewickelten Bandes. Ein anforderungsgemäßes Abflaggverhalten liegt vor, wenn das Band sowohl nach 30 Minuten, als auch nach 24 Stunden nicht mehr als 2 mm absteht.

Zu weiteren Gebrauchseigenschaften von Klebebändern, deren Bestimmungsmethoden ebenfalls durch die LV 312 genormt sind, zählen beispielsweise die Klebkraft auf dem Bandrücken und die Abrollkraft sowie die Handeinreißbarkeit. Schließlich sind auch die Klebkraft auf bestimmten Materialien, die Dicke, die Reißdehnung, die Bruchkraft, die Weiterreißfestigkeit sowie die Temperaturbeständigkeit weitere Gebrauchseigenschaften, die nach LV 312 bestimmt werden. Je nach Einsatzgebiet in der Automobilindustrie müssen z. B. Klebebänder verwendet werden, die eine Temperaturbeständigkeit bei Temperaturen größer als 125 °C aufweisen müssen.

Hinsichtlich der Geräuschdämpfung sieht die LV 312 die in der nachstehenden Tabelle 2 wiedergegebene Klassifizierung vor.

**Tabelle 2: Einteilung der Geräuschdämpfungsklassen nach LV 312**

| Geräuschdäm pfungsklasse | Anforderung |
|---|---|
| A - keine Geräuschdämpfung | 0 - 2 dB (A) |
| B - geringe Geräuschdämpfung | > 2 - 5 dB (A) |
| C - mittlere Geräuschdämpfung | > 5 - 10 dB (A) |
| D - hohe Geräuschdämpfung | > 10 - 15 dB (A) |
| E - sehr hohe Geräuschdämpfung | > 15 dB (A) |

Der Erfindung liegt das Problem zugrunde, ein Klebeband der eingangs genannten Art zu schaffen, das einerseits eine erhöhte Abriebfestigkeit aufweist, wodurch die Schutzfunktionen des Klebebandes in der Kabelsatzkonfektionierung weiter optimiert werden, das aber andererseits die Erhöhung der Abriebfestigkeit mit vergleichsweise geringem Aufwand herbeiführt, wobei darüber hinaus hinsichtlich der weiteren geforderten Gebrauchseigenschaften des Klebebandes, wie insbesondere der manuellen und maschinellen Verarbeitbarkeit, die mit dem Abflaggverhalten verbunden ist, oder wie auch der Geräuschdämpfung, keine Beeinträchtigung erfolgen soll.

Das der Erfindung zugrunde liegende Problem wird dadurch gelöst, dass zwischen dem Träger und der selbstklebenden Klebstoffschicht eine Zwischenschicht und/oder auf der der Klebstoffschicht abgewandten Seite des Trägers eine Deckschicht angeordnet ist, die ein Bindemittel umfasst, in das Teilchen einer mittleren Teilchengröße im Bereich von 0,005 µm bis 30,00 µm (gemessen mittels Dynamic Light Scattering (DLS)) eingebunden sind, wobei die Zwischenschicht und/oder die Deckschicht aus einer mechanisch komprimierten mikroporösen Schaumbeschichtung auf Basis einer wässrigen Dispersion von Polyurethan, Polyacrylsäure, eines Ethylen-Vinylacetat-Copolymers (EVA), eines Styrol-Butadien-Kautschuks (SBR) und/oder eines Acrylnitril-Butadien-Kautschuks (NBR) als Bindemittel hergestellt ist und die Dicke der Zwischenschicht und/oder der Deckschicht im Bereich von 50 µm bis 450 µm liegt..

Insbesondere kann die Teilchengröße im Bereich von 0,01 µm bis 20,00 µm, und besonders bevorzugt im Bereich von 0,05 µm bis 2,00 µm (50 nm bis 2000 nm), liegen. Teilchen mit einer Größe beginnend an der unteren Grenze des beanspruchten Bereichs, die nicht größer sind als die Obergrenze des besonders bevorzugten Bereichs von 2000 nm, werden anmeldungsgemäß auch unter den Begriffen "nanoskalige Teilchen" und "Nanopartikel" subsumiert.

Zur Bestimmung der Größe der erfindungsgemäß einsetzbaren Teilchen, insbesondere von nanoskaligen Teilchen, wird die Messmethode "Dynamic Light Scattering (DLS)" herangezogen (Dr. Michael Kaszuba & Dr. Kevin Mattison "High concentration particle size measurements using dynamic light scattering" Lab Plus international - September 2004, und Dahneke BE. "Measurement of Suspended Particles by Quasielastic Light Scattering", 1983, Wiley).

Die Teilchengrößenverteilung erscheint dabei als unkritisch. Jedoch kann diese bevorzugt folgendermaßen beschrieben werden. Ein Wert d50 beschreibt einen Wert des mittleren Durchmessers, bei dem jeweils 50 Masse-% der Durchmesser der vorhandenen Teilchen liegen. Der mittlere Durchmesser repräsentiert die mittlere Teilchengröße, wobei für Teilchen, die von einer Kugelgestalt abweichen, nach bekannten Methoden ein äquivalenter Durchmesser berechnet werden kann. Ein Wert d10 ist ein Durchmesser, oberhalb dessen 10 Masse-% und unterhalb dessen 90 Masse-% der Teilchen liegen, und ein Wert d90 ist ein Durchmesser, oberhalb dessen 90 Masse-% und unterhalb dessen 10 Masse-% der Teilchen liegen. Die Differenz d10-d90 dieser beiden Werte stellt ein Maß für die Verteilungsbreite dar. Hierbei wird insbesondere von einer unimodalen Normalverteilung der Teilchengröße ausgegangen. Die Differenz d10-d90 sollte dabei erfindungsgemäß bevorzugt nicht größer sein als 70 % des Durchmesserwertes d50.

Liegt der mittlere Durchmesser beispielsweise bei 200 nm (d50 = 0,2 µm), so sollte die Differenz d10-d90 vorzugsweise nicht größer sein als 140 nm (0,14 µm). Bei in erster Näherung in der Praxis vorauszusetzender unimodaler Normalverteilung der Teilchengröße bedeutet das, dass ein Masseanteil von 90 % der Teilchen kleiner ist als 270 nm (0,27 µm) und ein Masseanteil der Teilchen von 90 % der Teilchen nicht kleiner ist als 130 nm (0,13 µm).

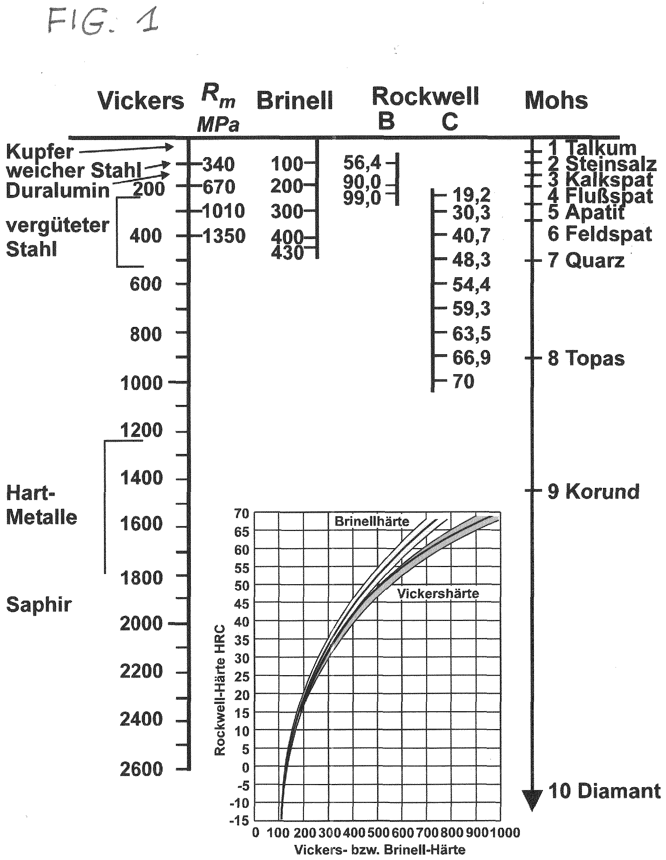

Überraschenderweise wurde gefunden, dass bereits Teilchen mit einer Mohs-Härte von 1, also z. B. aus Talkum bestehende Teilchen mit dem kleinstmöglichen Wert der Mohs-Härte, die in die Bindemittelmatrix eingebunden sind, bei einem erfindungsgemäßen Klebeband schon eine abriebfestigkeitssteigernde Wirkung hervorrufen. Dies gilt in zunehmendem Maß natürlich auch für Teilchen größerer Härte. In der DIN EN ISO 18265:2014-02, die sich zwar primär auf metallische Werkstoffe bezieht, ist ein Vergleich von nach verschiedenen Bestimmungsmethoden gewonnen Härtewerten enthalten, der sich unter anderem auch auf keramische bzw. zur Herstellung von keramischen Materialien einsetzbare Stoffe, wie Spate, Quarz und Korund bezieht, die nach der Mohs-Skala klassifiziert sind (siehe Fig. 1). Ein bevorzugter oberer Wert der Mohs-Härte der erfindungsgemäß in die Bindemittelmatrix eingebunden Teilchen beträgt 6. Das Bindemittel bewirkt dabei eine hohe Adhäsion an dem Träger und/oder - je nach dessen Porosität - Verankerung im Träger.

Wie noch nachstehend anhand der beschriebenen Beispiele im Detail deutlich wird, gelingt es erfindungsgemäß, die Anzahl der bei der Abriebbestimmung maßgeblichen Nadelhübe im Vergleich mit einem nicht erfindungsgemäßen Klebeband, das ansonsten den gleichen Aufbau hat, etwa bis um den Faktor 6 zu steigern, was so die Einstufung des erfindungsgemäßen Klebebandes in eine höhere Abriebklasse ermöglicht. Die weiteren Eigenschaften des erfindungsgemäßen Klebebandes, insbesondere seine Klebkraft sowie die Verarbeitbarkeit, die sich insbesondere aus dem Flagging ergibt, bleiben dabei mit Vorteil unbeeinträchtigt. Die Dicke des Bandes ändert sich prozentual gesehen nur gering und das Abflagg-Verhalten bleibt unbeeinflusst. Sogar die Handeinreißbarkeit bleibt - sofern sie bei einem nicht erfindungsgemäßen Vergleichsband gegeben ist - erhalten. Für die Geräuschdämpfung kann sich vorteilhafterweise sogar ein Anstieg ergeben, der - wie für den Abrieb - zur Einstufung in eine höhere Klasse gemäß der LV 312 führen kann.

Die Zwischen- bzw. Deckschicht wird als Schaum nach bekannten Applikationsmethoden wie insbesondere Streichen, Rakeln oder durch Düsenauftrag aufgebracht. Dabei wird das Trägermaterial mit dem teilchengefüllten Bindemittel ausgerüstet, und anschließend erfolgt in einem Trockenprozess die Vernetzung des Systems. Die Bindemittel können vorzugsweise zur Erhöhung der mechanischen Stabilität sowie zur Verbesserung der thermischen und hydrolytischen Eigenschaften unter Einsatz von Additiven, wie zum Beispiel Isocyanaten und/oder Melaminharzen, vernetzt werden.

In bevorzugter Ausführung kann die Ausrüstung des Trägermaterials mit der abriebsteigernden Zwischen- und/oder Deckschicht über die Verwendung von mechanisch komprimierten mikroporösen Schaumbeschichtungen auf Basis wässriger Polyurethan-Dispersionen oder Polyacrylsäuredispersionen als Bindemittel erfolgen.

Die pulverförmigen Teilchen, welche den Füllstoff der Schicht bilden, können bevorzugt nichtmetallische, insbesondere keramische bzw. üblicherweise zur Herstellung von keramischen Materialien eingesetzte Teilchen sein. So können diese Teilchen beispielsweise aus Titandioxid, Kaolinen, Silikaten, Talkum oder Kreiden oder aus einer Mischung derselben bestehen.

Als Trägermaterialien eignen sich einerseits insbesondere aus Kunststoff bestehende Folien, sowie andererseits bevorzugt textile Träger sowie auch Kombinationen aus diesen. Unter dem Begriff "textiler Träger" werden im Rahmen der Anmeldung - wie auch im allgemeinen Verständnis - Gewebe sowie auch Gewirke und Vliese (sog. non-woven) sowie gegebenenfalls aus diesen gebildete Verbünde verstanden, wobei ein Gewebe bevorzugt, und ein Polyestergewebe, insbesondere aus PET (Polyethylenterephthalat), besonders bevorzugt ist.

Grundsätzlich werden insbesondere vier Arten von Klebstoffen unterschieden, die für Klebebänder einsetzbar sind. Es sind dies lösemittelhaltige Systeme, reaktive Systeme, Schmelzklebstoffe, die auch als Hotmelts bezeichnet werden, und wasserbasierte Systeme. Die auf die Zwischenschicht erfolgende Beschichtung mit einem Haftklebstoff kann insbesondere mit Dispersionen, lösungsmittelbasierten Acrylaten oder Silikonsystemen oder mit Schmelzklebstoffen auf Basis von Kautschuk oder auf der Basis von Acrylaten erfolgen.

Was die Klebstoffbeschichtung betrifft, so werden im Rahmen der Erfindung in besonderer Ausführung lösungsmittelfreie UV-vernetzbare Acrylatklebstoffe als druckempfindliche Haftklebstoffe eingesetzt. Dies trägt dazu bei, dass sich das erfindungsgemäße Klebeband durch eine hohe Resistenz gegen verschiedene Chemikalieneinflüsse, eine außerordentlich hohe Beständigkeit gegenüber Alterungsprozessen und durch eine ausgezeichnete Kompatibilität mit den verschiedensten zu verklebenden Bauteilen auszeichnet.

Derartige UV-vernetzbare Haftklebstoffe werden beispielsweise in verschiedenen Ausführungsarten unter dem Namen acResin^{®} von der BASF im Handel vertrieben. Sie können bei Temperaturen von 120 °C auf herkömmlichen Hotmelt-Coatern verarbeitet werden, die zusätzlich mit UV-Lampen ausgestattet sind. Spezielle Trocknungsanlagen sind nicht erforderlich. Im Vergleich mit lösungsmittelhaltigen Acrylatklebern weist eine Klebebeschichtung auf der Basis derartiger Haftklebstoffe wegen der darin enthaltenen minimalen Menge von migrationsfähigen Inhaltsstoffen nur eine geringe Ausgasung flüchtiger Substanzen auf.

Weitere vorteilhafte Ausführungen der Erfindung sind in den Unteransprüchen und in der nachfolgenden speziellen Beschreibung enthalten.

Das erfindungsgemäße Klebeband umfasst einen bandförmigen textilen Träger, der in den nachfolgenden Beispielen vorzugsweise aus einem Polyestergewebe oder -vlies besteht, und eine mindestens einseitig auf den Träger aufgetragene, aus einem Haftklebstoff bestehende Klebebeschichtung.

**Tabelle 3: PET-Gewebeträger, Ausführungsbeispiel 1**

| Parameter | Einheit | Standard "Coroplast 839" | Erfindung |
|---|---|---|---|
| Trägergewicht | g/m² | 65 - 70 | 65 - 70 |
| Zwischenschicht | g/m² | - | 90 - 110 |
| Klebstoffart | | Kautschuk | Kautschuk |
| Klebstoffgewicht | g/m² | 69 - 71 | 69 - 71 |
| Anzahl der Kettfäden | 1/cm | 32 | 32 |
| Stärke der Kettfäden | dtex | 84 | 84 |
| Anzahl der Schussfäden | 1/cm | 30 | 30 |
| Stärke der Schussfäden | dtex | 167 | 167 |
| Abrieb nach LV 312 | Klasse | B | D |
| Geräuschdämpfung nach LV 312 | Klasse | A | A |
| Dicke | mm | 0,17 | 0,19 - 0,25 |
| Handeinreißbarkeit nach LV 312 | | Ja | ja |
| Flagging nach LV 312 | | Forderung erfüllt | Forderung erfüllt |

Details zu den eingesetzten Trägern sind den Tabellen 3 bis 6 zu entnehmen, wobei sich die Tabellen 3 und 4 auf Klebebänder mit jeweils einem Polyester-Gewebeträger und die Tabellen 5 und 6 auf Klebebänder mit jeweils einem Polyester-Nähvlies als Träger beziehen.

**Tabelle 4: PET-Gewebeträger, Ausführungsbeispiel 2**

| Parameter | Einheit | Standard "Coroplast 837 X" | Erfindung |
|---|---|---|---|
| Trägergewicht | g/m² | 127 - 133 | 127 - 133 |
| Zwischenschicht | g/m² | - | 90 - 110 |
| Klebstoffart | | UV-Acrylat | UV-Acrylat |
| Klebstoffgewicht | g/m² | 69 - 71 | 69 - 71 |
| Anzahl der Kettfäden | 1/cm | 45 | 45 |
| Stärke der Kettfäden | dtex | 167 | 167 |
| Anzahl der Schussfäden | 1/cm | 25 | 25 |
| Stärke der Schussfäden | dtex | 167 | 167 |
| Abrieb nach LV 312 | Klasse | D | E |
| Geräuschdämpfung nach LV 312 | Klasse | A | A |
| Dicke | mm | 0,17 | 0,19 - 0,25 |
| Handeinreißbarkeit nach LV 312 | | Nein | nein |
| Flagging nach LV 312 | | Forderung erfüllt | Forderung erfüllt |

Als jeweiliger Standard zum Vergleich mit dem erfindungsgemäßen Klebeband wurden gemäß den Tabellen 3 und 4 Polyestergewebeklebebänder für die Kabelsatzherstellung aus dem Fertigungsprogramm der Anmelderin gewählt.

Da diese Bänder für die Bandagierung und Bündelung von Kabelsätzen eingesetzt werden, weisen sie zur Herstellung einer abriebfesten und/oder optisch ansprechenden Kabelstrangumhüllung eine dichte Gewebestruktur, eine sehr gute Kälte- und Wärmebeständigkeit sowie Alterungsbeständigkeit und Verrottungsfestigkeit auf.

Bei dem Band "Coroplast 839" steht dabei im Vordergrund, dass es von Hand einreißbar ist, und dass damit eine optisch ansprechende Kabelstrangumhüllung hergestellt werden kann.

Das Band "Coroplast 837 X" eignet sich hervorragend für Motorraum- und Motorblockanwendungen, da es hochtemperaturbeständig ist und eine ausgezeichnete Beständigkeit gegen Betriebsmittelflüssigkeiten aufweist. Des Weiteren ist es kompatibel mit vielen Leitungsisolationswerkstoffen, wie z. B. XPE und PP. Das "X" im Namen weist darauf hin, dass die Klebstoffschicht aus einem lösungsmittelfreien Acrylat-Klebstoff besteht. Das Band ist besonders für eine manuelle Verarbeitung geeignet.

**Tabelle 5: PET-Nähvlies, Ausführungsbeispiel 3**

| Parameter | Einheit | Standard "Coroplast 8572" | Erfindung |
|---|---|---|---|
| Trägergewicht | g/m² | 168 - 192 | 168 - 192 |
| Zwischenschicht | g/m² | - | 90 - 110 |
| Klebstoffart | | Kautschuk | Kautschuk |
| Klebstoffgewicht | g/m² | 150 - 165 | 150 - 165 |
| Anzahl der Nähfäden | F | 14 | 14 |
| Stärke der Nähfäden | dtex | 50 | 50 |
| Abrieb nach LV 312 | Klasse | D | E |
| Geräuschdämpfung nach LV 312 | Klasse | D | D |
| Dicke | mm | 0,70 - 0,90 | 0,80 - 1,00 |
| Handeinreißbarkeit nach LV 312 | | nein | nein |
| Flagging nach LV 312 | | Forderung erfüllt | Forderung erfüllt |

Als jeweiliger Standard zum Vergleich mit dem erfindungsgemäßen Klebeband wurden gemäß den Tabellen 5 und 6 Polyesternähvlies-Klebebänder für die Kabelsatzherstellung aus dem Fertigungsprogramm der Anmelderin gewählt.

Diese Bänder werden für die Bandagierung und Bündelung von Kabelsätzen aufgrund ihrer weichen Materialstruktur und Oberflächenhaptik überall dort eingesetzt, wo eine gute Eignung für Klapperschutz und Geräuschdämpfung gefordert ist. Sie sind alterungsbeständig und verrottungsfest und weisen eine sehr gute Kälte- und Wärmebeständigkeit auf.

**Tabelle 6: PET-Nähvlies, Ausführungsbeispiel 4**

| Parameter | Einheit | Standard "Coroplast 8575 X" | Erfindung |
|---|---|---|---|
| Trägergewicht | g/m² | 181 - 205 | 181 - 205 |
| Zwischenschicht | g/m² | - | 90 - 110 |
| Klebstoffart | | UV-Acrylat | UV-Acrylat |
| Klebstoffgewicht | g/m² | 110 - 130 | 110 - 130 |
| Anzahl der Nähfäden | F | 14 | 14 |
| Stärke der Nähfäden | dtex | 50 | 50 |
| Abrieb nach LV 312 | Klasse | D | E |
| Geräuschdämpfung nach LV 312 | Klasse | D | D |
| Dicke | mm | 0,80 - 1,00 | 0,90 - 1,10 |
| Handeinreißbarkeit nach LV 312 | | ja | ja |
| Flagging nach LV 312 | | Forderung erfüllt | Forderung erfüllt |

Das Klebeband "Coroplast 8572" ist ein Klebeband, welches Banddicken aufweisen kann, die an spezielle Anforderungen von Erstausrüstern (OEM = Original Equipment Manufacturer) angepasst sind. Es verfügt über herausragende Klapperschutzeigenschaften, sehr gute Abriebeigenschaften, ist von Hand einreißbar und besonders für die manuelle Verarbeitung prädestiniert.

Das Klebeband "Coroplast 8575 X" eignet sich insbesondere für eine rationelle, manuelle Anwendung und kann wegen seiner herausragenden Klapperschutzeigenschaften als hochwertige Alternative zu Klebebändern aus Schaumstoff, Filz etc. dienen. Zusätzlich weist es bereits sehr gute Abriebeigenschaften auf und zeichnet sich durch ein besonders einfaches Handling und durch leichte Einreißbarkeit aus.

Die Ausführungen des erfindungsgemäßen Klebebandes wurden folgendermaßen hergestellt: Eine gefüllte Kunststoffdispersion, insbesondere eine wasserlösliche anionische Acrylatdispersion der Firma CHT R. Beitlich GmbH, Tübingen, kommerziell erhältlich unter dem Handelsnamen TubiCoat BO-UR, wurde als mechanisch komprimierbarer, mikroporöser Schaum, insbesondere mit einem Schaumlitergewicht im Bereich von 160 g/l bis 270 g/l, vorzugsweise von 180 g/l, in einer Schichtdicke im Bereich von 0,6 mm bis 1,1 mm, vorzugsweise von 0,8 mm, und mit einem Flächengewicht im Bereich von 80 g/m² bis 150 g/m², vorzugsweise mit einem Flächengewicht von 100 g/m² - bestimmt im getrockneten Endzustand -, auf die verschiedenen, in den Tabellen genannten Trägermaterialien appliziert und danach mechanisch komprimiert und getrocknet.

Die Schaumbildung wurde dabei durch die Anwesenheit von Tensiden und Stabilisatoren in der Rezeptur ermöglicht. Mittels eines dynamischen, nach dem Rotor-Stator-Prinzip arbeitenden Schaummixers wurde die Dispersion unter - entsprechend einem gewünschten Schaumlitergewicht gewählter - Luftzufuhr aufgeschäumt. Der Schaum konnte - je nach der Menge der Stabilisatoren - sowohl stabil eingestellt sein, wobei er keine Veränderung über die Zeit zeigte, als auch instabil, wobei er nach einiger Zeit etwas zusammenfiel.

Neben dem beschriebenen, kommerziell erhältlichen TubiCoat BO-UR sind bevorzugt auch Produkte mit dem Handelsnamen Apyrol BO ECO PLUS als partikelhaltige Kunststoffdispersionen geeignet, welche sich durch die Zugabe eines Flammschutzmittels, insbesondere auf der Basis von Stickstoff und Phosphor, vom TubiCoat unterscheiden.

Die Kunststoffdispersion, welche bekanntermaßen dazu verwendet wird, um Rollos lichtundurchlässig zu machen, ist im Handelszustand eine weiße, niedrigviskose Paste und hat bei 20 °C eine dynamische Viskosität im Bereich von 900 mPa.s bis 1800 mPa.s, gemessen mit einem Viskosimeter Haake VT 02, Spindel 1. Der pH-Wert der Dispersion liegt - unverdünnt bei 20 °C - im Bereich von 7,6 bis 11,0 insbesondere im Bereich von 9,0 bis 10,0, wobei diese Basizität durch Ammoniak eingestellt ist. Der Feststoffgehalt beträgt 44 ± 2 Masse-%, wobei die Dispersion Titandioxid mit einer mittleren Partikelgröße im Bereich von 15 nm bis 120 nm enthält. Die Bestimmung der Partikelgröße erfolgt nach der Norm EN ISO 787-7:2009 "Allgemeine Prüfverfahren für Pigmente und Füllstoffe - Teil 7: Bestimmung des Siebrückstandes - Wasserverfahren - Handspülverfahren".

Die Verwendung von mechanisch komprimiertem mikroporösem Schaum bietet gegenüber der Verwendung einer Paste oder Flüssigkeit aufgrund der erhöhten Weichheit und der besonderen Struktur Vorteile hinsichtlich Flaggingverhalten, Verarbeitung sowie Geräuschdämpfung.

Der Begriff "mikroporös" wird dabei aus dem Textilbereich abgeleitet und ist dadurch definiert, dass der entsprechende Werkstoff Poren aufweist, die kleiner als 2 nm sind, wodurch eine entsprechende Atmungsaktivität gegeben ist. Diese kann als nach der Norm ISO 15496:2004-09 bestimmte Wasserdampfdurchlässigkeit (WVT) in g/m²/Tag ausgewiesen werden und stellt ein Äquivalent zur Porengröße dar. Die Mikroporen verbleiben in der getrockneten Zwischenschicht, werden allerdings erst durch die mechanische Verdichtung, insbesondere durch eine Kalandrierung, auf die Größe < 2 nm gebracht.

Der Dispersion wird vor der Auftragung ein Vernetzersystem, kommerziell erhältlich unter dem Handelsnamen TubiCoat Fix H 26, in einem Verhältnis von 50 Teilen Fix H 26 zu 950 Teilen Dispersion zugesetzt. Das Vernetzersystem kann als in Wasser vorliegendes blockiertes aliphatisches Polyisocyanat charakterisiert werden, welches zur Polyurethanbildung auch ethoxiliertes Isotridecanol in auf die dabei ablaufende Polyaddition stöchiometrisch abgestimmten Anteilen enthält.

Die Auftragung auf den Träger erfolgte insbesondere mittels einer Walzenrakel. Anschließend wurde der so beschichtete Träger 90 Sekunden lang bei 100 °C getrocknet. Zur Verbesserung der Verankerung der Auftragsschicht auf dem Träger wurde der beschichtete Träger mittels eines Kalanders verpresst, wobei kontinuierlich ein spezifischer, auf die Kalanderbreite bezogener linearer Druck von 200 N/mm aufgewendet wurde. Nach dem Kalandrieren wurde der beschichtete Träger durch eine weitere Wärmebehandlung bei 150 °C für 90 Sekunden fixiert. Die Wärme aktivierte dabei das blockierte aliphatische Polyisocyanat, wodurch eine Vernetzung der Kunststoffdispersion erfolgte. Einer Nassauflage von 170 -190 g/m² Schaum entsprach dann eine Trocken-Auftragsmenge von 90 - 110 g/m². Nach der Trocknung liegt eine Restfeuchte von nicht mehr als 5 Ma.-% Wasser, insbesondere eine Restfeuchte im Bereich von 2 Ma.-% bis 3 Ma.-% Wasser, vor.

Was allgemein das Verhältnis des Feststoffgehaltes der Bindemittelmatrix zum Gehalt der den Füllstoff bildenden Teilchen betrifft, so sollte dieses charakteristischerweise bei 1:1 liegen, da eine "Überladung" an Bindemittel zu einer Versprödung der Zwischen- bzw. Deckschicht führen kann. Eine "Unterladung" ist denkbar, daher sollte der Feststoffgehalt des Bindemittels im Bereich von 10 Ma.-% bis 70 Ma.-% der Gesamtmasse der jeweiligen Schicht liegen, bevorzugt im Bereich von 40 Ma.-% bis 50 Ma.-%. Anders ausgedrückt: ein Feststoff-Masseverhältnis des Bindemittels zu den Teilchen in der Zwischenschicht und/oder in der Deckschicht sollte im Bereich von 1 : 9 bis 7 : 3, insbesondere im Bereich von 2 : 3 bis 1 : 1 liegen.

In einem sich anschließenden Arbeitsschritt erfolgte dann eine weitere Beschichtung des vorgestrichenen Trägermaterials mittels eines Haftklebstoffes auf die zuvor aufgebrachte Zwischenschicht. Als Auftragsverfahren für die erfindungsgemäß bevorzugt eingesetzten Klebstoffe kann zunächst mit Vorteil eine Direktbeschichtung des Trägers mittels eines Walzen - oder Düsenauftrags eingesetzt werden. Beim Walzenauftrag wird der durch Schmelzen verflüssigte Klebstoff über ein beheiztes Walzensystem dosiert und in der gewünschten Schichtdicke aufgetragen. Bei einem Düsenauftrag wird der geschmolzene Klebstoff mittels einer Pumpe durch eine Breitschlitzdüse, insbesondere eine GID-Düse gedrückt. Eine GID-Düse arbeitet nach dem Prinzip der "Cuette"-Strömung. Hierdurch wird durch die bewegte Warenbahn durch Schleppströmung bei niedrigem Druckniveau so viel Masse abgeführt, wie durch eine Pumpe zugeführt wird. Hierdurch wird der hydraulische Druckaufbau im Beschichtungsspalt bei jeder Beschichtungsbreite und Maschinengeschwindigkeit konstant gehalten.

Alternativ kann in einem drucklosen Beschichtungsverfahren, insbesondere in einem sogenannten "Curtain-Coating-Prozess" drucklos der Klebstoff auf den Träger aufgebracht werden. Dadurch wird eine gleichmäßige Dicke und damit Grammatur der Klebstoffschicht erreicht. Es wird nur so viel Klebstoff aufgetragen, wie unbedingt benötigt wird. Schließlich kann, insbesondere bei temperaturempfindlichen Trägern, als weiteres Auftragsverfahren für die im Rahmen der Erfindung einsetzbaren Klebstoffe eine indirekte Beschichtung über einen Transferprozess mit Hilfe eines Zwischenträgers zum Einsatz kommen. Dazu wird zuerst ein silikonisierter Interliner, wie ein silikonisiertes Papier oder eine silikonisierte Polymerfolie, z. B. eine Polyolefinfolie oder eine Polyesterfolie, beschichtet. Anschließend wird der Klebstoff abgekühlt und das Trägermaterial zukaschiert. Soll ein auf sich selbst gewickeltes Klebeband nach diesem Verfahren hergestellt werden, so muss bei der Konfektionierung der Rollen allerdings der Interliner, welcher als Prozesshilfe dient, wieder von dem Trägermaterial abgezogen und separat aufgewickelt werden. Da dies mit zusätzlichem Aufwand verbunden ist, wird die Direktbeschichtung bevorzugt gewählt.

Im Allgemeinen kann festgestellt werden, dass Direktbeschichtungen sich immer dann vorteilhaft durchführen lassen, wenn der Träger ausreichend dicht ist, d. h. ein Wandern der Klebstoffe durch den Träger während der Beschichtung ausgeschlossen werden kann. Die erfindungsgemäß vorgesehene Zwischenschicht bewirkt dabei mit Vorteil eine erhöhte Dichte unter der Klebstoffschicht, so dass die vergleichsweise weniger aufwändigen Direktbeschichtungen im Rahmen der Erfindung bevorzugt zum Einsatz kommen können.

Der druckempfindliche Haftkleber wurde auf die Zwischenschicht aufgetragen, wobei sich - sowohl bei den in den Tabellen 3 und 5 genannten Kautschukklebern, als auch bei den in den Tabellen 4 und 6 genannten UV-Acrylatklebern - eine durchgehende, ununterbrochene, einheitliche Klebefläche ausbildete. Die Klebstoffschicht wurde dabei jeweils mit den in den Tabellen genannten spezifischen Flächengewichten aufgetragen. Es ist allerdings zu erwähnen, dass die für die Erfindung genannten Klebstoffgrammaturen mit Vorteil auch deutlich, insbesondere um bis zu 50 Prozent, niedriger ausfallen können, da durch die Zwischenschicht ein Einsinken des Klebstoffs in den textilen Träger verhindert wird.

Die verschiedenen Ausführungen des erfindungsgemäßen Klebebandes zeigten dabei im Vergleich mit den herkömmlichen Klebebändern jeweils die in den Tabellen 3 bis 6 in der letzten Spalte wiedergegebenen Eigenschaften.

Die jeweilige Dicke der Zwischenschicht und/oder der Deckschicht kann vorzugsweise im Bereich von 90 µm bis 130 µm, liegen, wobei die Differenzen der jeweiligen Dickenwerte des erfindungsgemäßen Klebebandes und des Standardklebebandes in den Tabellen 3 bis 6 dafür charakteristisch sind.

Hervorzuheben ist insbesondere, dass die erfindungsgemäßen Klebebänder nach der Beschichtung mit den Haftklebstoffen eine stark erhöhte Abriebfestigkeit auf einem 5-mm-Dorn nach der Methode LV 312 aufwiesen, wobei sich diese Tendenz auch bei der Verwendung unterschiedlicher Trägermaterialien verifizieren ließ. Dies wird durch die nachstehende Tabelle 7 veranschaulicht, in der die wichtigsten Kenngrößen von weiteren Ausführungsbeispielen der Erfindung enthalten sind. Die erfindungsgemäß vorgesehene Zwischenschicht wurde dabei jeweils auf die vorstehend beschriebene Weise ausgebildet.

**Tabelle 7. Ausführungsbeispiele 5 bis 14**

| Beispiel | Träger | Klebstoff | Abrieb Erfindung [Hübe] | Abrieb Standard [Hübe] |
|---|---|---|---|---|
| 5 | PET Gewebe 72 g/m² | Kautschuk | 467 | 160 |
| 6 | PET Gewebe 72 g/m² | Acrylat | 990 | 130 |
| 7 | PET Gewebe 130 g/m² | Kautschuk | 4120 | 800 |
| 8 | PET Gewebe 130 g/m² | Acrylat | 7700 | 800 |
| 9 | Nähvlies 65 g/m² | Kautschuk | 463 | 92 |
| 10 | Nähvlies 65 g/m² | Acrylat | 168 | 30 |
| 11 | Nähvlies 130 g/m² | Kautschuk | 1025 | 382 |
| 12 | Nähvlies 130 g/m² | Acrylat | 1168 | 224 |
| 13 | Nähvlies 180 g/m² | Kautschuk | 2113 | 477 |
| 14 | Nähvlies 180 g/m² | Acrylat | 2438 | 572 |

Wie bereits erwähnt und den Tabellen 3 bis 6 zu entnehmen ist, änderten sich die Dicken der erfindungsgemäßen Klebebänder gegenüber dem jeweiligen Standard nur gering und das Abflagg-Verhalten blieb unbeeinflusst. Die Handeinreißbarkeit blieb erhalten, ebenso die Geräuschdämpfung. Auch kam es weder zu Delaminationen der Zwischenschicht vom Träger, noch der Klebstoffschicht von der Zwischenschicht. Die Klebkraft sowie auch weitere für Kabelwickelbänder relevante Eigenschaften, wie Medienbeständigkeit, Temperaturbeständigkeit sowie die Verträglichkeit mit Kabelisolationsmaterialien wurden von der Zwischenschicht nicht negativ beeinflusst. Dies war für alle Ausführungsbeispiele zu konstatieren.

Die Erfindung ist nicht auf die dargestellten Ausführungsbeispiele beschränkt, sondern umfasst im Rahmen der Ansprüche auch alle im Sinne der Erfindung gleichwirkenden Ausführungen und Verwendungen. So ist eine doppelseitige Klebebeschichtung des Trägers zwar primär nicht intendiert, jedoch fällt auch ein Klebeband mit einer solchen in den Bereich der Erfindung. Hier kann dann auch beidseitig auf der Trägeroberfläche die erfindungsgemäß vorgesehene Zwischenschicht aufgetragen werden. Das erfindungsgemäße Klebeband kann außer - wie bevorzugt - zum Umwickeln von Kabeln in vorteilhafter Weise auch zur Verklebung von Profilen, Kanälen, Gehäusen oder Halteteilen eingesetzt werden. Der mögliche Einsatz eines erfindungsgemäßen Klebebandes beschränkt sich aber nicht auf metallische oder Kunststoff-Werkstoffe, sondern das Klebeband könnte als Klebeband - beispielsweise in der Möbelindustrie - auch zum Verkleben von Holzteilen eingesetzt werden.

Den Nanopartikeln, welche im Rahmen der Beispiele in der Zwischenschicht enthalten sind, ist aufgrund ihrer hohen spezifischen Oberfläche eine besondere Eignung im Rahmen der Erfindung zuzuschreiben, weil dadurch in Wechselwirkung mit dem Bindemittel eine besonders hohe Abriebsteigerung bewirkt wird. Wenngleich zwar in allen Beispielen nanoskalige Partikel in der Zwischenschicht eingesetzt wurden, welche dadurch eine optimal ausgebildete Grundierungsschicht für den Klebstoff bildet, so hat sich doch gezeigt, dass auch in dem beanspruchten weiteren Bereich der mittleren Teilchengröße von 0,01 µm bis 30,00 µm ähnlich vorteilhafte Ergebnisse wie bei den aufgeführten Beispielen zu erzielen waren. Ganz besonders bevorzugt sind jedoch Partikelgrößen unter 200 nm. Gleiches gilt auch für erfindungsgemäße Klebebänder mit Kunststoff-Folienträger.

Ferner kann der Fachmann im Rahmen der Ansprüche, insbesondere im Hinblick auf die Auswahl des Trägers, Variationen vornehmen, ohne dass der Rahmen der Erfindung verlassen wird. Was das eingesetzte Bindemittel betrifft, so sind neben den erwähnten Acrylaten und PU-Dispersionen auch Dispersionen auf der Basis eines Ethylen-Vinylacetat-Coploymers (EVA), eines Styrol-Butadien-Kautschuks (SBR) und/oder eines Acrylnitril-Butadien-Kautschuks (NBR) als Bindemittel verwendbar.

Wenn ein im Rahmen der Erfindung besonders bevorzugt einsetzbarer Träger aus einem Gewebe mit Fäden besteht, die sich einerseits als Längsfäden in Längsrichtung des Klebebandes und andererseits als Querfäden in Querrichtung des Klebebandes erstrecken, so kann bevorzugt ein auf die Breite bezogener Titer der Längsfäden kleiner als ein auf die Länge bezogener Titer der Querfäden sein, wobei der auf die Breite bezogene Titer der Längsfäden mindestens 2600 dtex/cm, vorzugsweise mindestens 2800 dtex/cm, besonders bevorzugt mindestens 2950 dtex/cm, und der auf die Länge bezogene Titer der Querfäden mindestens 4700 dtex/cm, vorzugsweise mindestens 5200 dtex/cm beträgt. Die Fadendichte der Querfäden kann wenigstens 18 Fäden pro Zentimeter Länge, vorzugsweise mindestens 28 Fäden pro Zentimeter Länge, besonders bevorzugt mindestens 30 Fäden pro Zentimeter Länge betragen. Die Fadendichte der Längsfäden kann im Bereich zwischen 30 und 50 Fäden pro Zentimeter Breite liegen. Die Stärke der Querfäden kann mindestens 150 dtex, vorzugsweise 160 bis 180 dtex, betragen. Die Stärke der Längsfäden kann mindestens 65 dtex betragen und vorzugsweise im Bereich von 80 dtex bis 100 dtex liegen. Die Längsfäden und die Querfäden können außer durch die Klebstoffschicht zusätzlich gegen eine Verschiebung relativ zueinander fixiert sein.

Hierzu kommen in Alleinstellung oder in Kombination folgende Möglichkeiten in Frage:
- dass die Fäden gegen eine Verschiebung durch den Einsatz von texturierten Garnen als Längsfäden und/oder Querfäden relativ zueinander fixiert sind,
- dass die Fäden gegen eine Verschiebung durch eine Kalandrierung des Trägers relativ zueinander fixiert sind,
- dass die Fäden gegen eine Verschiebung durch eine zusätzliche Acrylat- oder Polyurethanbeschichtung des Trägers relativ zueinander fixiert sind,
- dass die Fäden gegen eine Verschiebung durch eine Appretur des Trägers relativ zueinander fixiert sind.
- dass die Fäden gegen eine Verschiebung durch ein Intermingeln der - glatten oder texturierten - Fäden relativ zueinander fixiert sind oder dass die Fixation der Fäden durch ein Intermingeln erhöht ist.

Bei den Fäden kann es sich um Multifilamentfäden handeln, wobei insbesondere Längsfäden und Querfäden mit unterschiedlicher Filamentanzahl miteinander kombiniert sind. Die Längsfäden können dabei aus 16 bis 32 Filamenten pro Faden, vorzugsweise aus 22 bis 26 Filamenten pro Faden, bestehen. Die Querfäden können aus 28 bis 44 Filamenten pro Faden, vorzugsweise aus 34 bis 38 Filamenten pro Faden, bestehen. Ein Klebeband mit einem derartigen Träger ist im deutschen Gebrauchsmuster DE 20 2007 006 816 U1 beschrieben, auf das hinsichtlich weiterer Eigenschaften in vollem Umfang verwiesen wird.

Ein weiterer im Rahmen der vorliegenden Erfindung besonders bevorzugt einsetzbarer bandförmiger Klebeband-Gewebeträger ist in der EP 2 322 385 A1 beschrieben. Auch hier ist bevorzugt ein auf die Breite bezogener Titer der Längsfäden kleiner als ein auf die Länge bezogener Titer der Querfäden, wobei allerdings der auf die Breite bezogene Titer der Längsfäden im Bereich von 2.000 dtex/cm bis 4.000 dtex/cm liegt und der auf die Länge bezogene Titer der Schussfäden im Bereich von 8.000 dtex/cm bis 20.000 dtex/cm, vorzugsweise im Bereich von 8.000 dtex/cm bis 16.000 dtex/cm, besonders bevorzugt im Bereich von 9.000 dtex/cm bis 12.100 dtex/cm, insbesondere bei 11.000 dtex/cm. Die Fadenstärke der Schussfäden kann bevorzugt größer als 400 dtex sein und insbesondere bei 550 dtex liegen. Die Fadenstärke der Kettfäden kann größer oder gleich 50 dtex sein und insbesondere 55 dtex oder 84 dtex betragen. Der Schussfaden kann als Einzelfaden, aus zwei Einzelfäden - wobei der eine Einzelfaden eine Stärke von 220 dtex und der andere Einzelfaden eine Stärke von 330 dtex besitzt - oder aus drei bis fünf Einzelfäden gebildet sein, wobei die Stärke der einzelnen Einzelfäden jeweils 167 dtex beträgt. Die Anzahl der Schussfäden pro cm Bandlänge kann 16 bis 32, insbesondere 20 bis 24 betragen. Die Anzahl der Kettfäden pro cm Bandbreite kann 27 bis 60, insbesondere 35 bis 48 betragen. Der Gewebeträger kann vollständig aus einem Polyester-Gewebe bestehen oder einen Polyesterkettfaden und einen Polyamidschussfaden besitzen. Die Kett- und/oder Schussfäden können aus Filamentgarnen bestehen und im Garnverwirbelungsverfahren (Intermingling) hergestellt sein. Sie können aus glatten und/oder texturierten Fäden bestehen. Die aus einzelnen Filamenten gebildeten Kett- und/oder Schussfäden können unterschiedliche Anzahlen von Filamenten besitzen. Dabei kann das Trägergewebe durch ein Kalandrieren verfestigt sein. Hinsichtlich weiterer Eigenschaften wird in vollem Umfang auf das genannte Dokument, insbesondere auf dessen Ausführungsbeispiele, verwiesen, wobei insbesondere die Vorteile des Vorhandenseins einer Quereinreißbarkeit der Bänder bei gleichzeitig hoher Abriebfestigkeit (Abriebklasse D nach LV 312) hervorzuheben sind. Wie bereits erwähnt, kann durch die im Rahmen der Erfindung vorgesehenen technischen Maßnahmen bei derartigen Klebebändern ein weiterer Anstieg der Abriebfestigkeit erreicht werden.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Klebeband, insbesondere ein Kabelwickelband, mit einem Träger, der mindestens auf einer Seite mit einer selbstklebenden Klebstoffschicht versehen ist, die aus einem druckempfindlichen Haftkleber besteht, wobei zwischen dem Träger und der selbstklebenden Klebstoffschicht eine Zwischenschicht und/oder auf der der Klebstoffschicht abgewandten Seite des Trägers eine Deckschicht angeordnet ist, die ein Bindemittel umfasst, in das Teilchen einer mittleren Teilchengröße im Bereich von 0,005 µm bis 30,0 µm (gemessen mittels Dynamic Light Scattering (DLS)) eingebunden sind,
**dadurch gekennzeichnet, dass** die Zwischenschicht und/oder die Deckschicht aus einer mechanisch komprimierten mikroporösen Schaumbeschichtung auf Basis einer wässrigen Dispersion von Polyurethan, Polyacrylsäure, eines Ethylen-Vinylacetat-Copolymers (EVA), eines Styrol-Butadien-Kautschuks (SBR) und/oder eines Acrylnitril-Butadien-Kautschuks (NBR) als Bindemittel hergestellt ist und
die Dicke der Zwischenschicht und/oder der Deckschicht im Bereich von 50 µm bis 450 µm liegt.

2. Klebeband nach Anspruch 1,
**dadurch gekennzeichnet, dass** die Teilchen in der Zwischenschicht und/oder in der Deckschicht eine mittlere Größe im Bereich von 0,01 µm bis 20,00 µm, bevorzugt im Bereich von 0,05 µm bis 2,00 µm, besonders bevorzugt unter 200 nm, aufweisen.

3. Klebeband nach Anspruch 1 oder 2,
**dadurch gekennzeichnet, dass** das teilchengefüllte Bindemittel der Zwischenschicht und/oder der Deckschicht als Flüssigkeit, als Paste oder als Schaum durch Streichen, Rakeln oder durch Düsenauftrag aufgebracht und anschließend getrocknet und, vorzugsweise unter Einsatz von Additiven, wie Isocyanaten und/oder Melaminharzen, vernetzt ist, wobei der Feuchtegehalt in der Zwischenschicht und/oder der Deckschicht insbesondere höchstens Ma.-5 %, bevorzugt 2 Ma.-% bis 3 Ma.-%, beträgt.

4. Klebeband nach einem der Ansprüche 1 bis 3,
**dadurch gekennzeichnet, dass** die Teilchen, welche den Füllstoff der Schicht bilden, nichtmetallische, insbesondere keramische Teilchen sind, wie Teilchen aus Titandioxid, Kaolinen, Silikaten, Talkum oder Kreiden, oder aus einer Mischung dieser Materialien, wobei die Teilchen insbesondere mindestens eine Mohs-Härte von 1 aufweisen, wobei ein oberer Wert der Mohs-Härte bevorzugt 6 beträgt.

5. Klebeband nach einem der Ansprüche 1 bis 4,
**dadurch gekennzeichnet, dass** die Dicke der Zwischenschicht und/oder der Deckschicht im Bereich von 90 µm bis 130 µm liegt.

6. Klebeband nach einem der Ansprüche 1 bis 5,
**dadurch gekennzeichnet, dass** der Träger eine, insbesondere aus Kunststoff bestehende, Folie oder bevorzugt einen textilen Träger oder eine Kombination aus diesen umfasst.

7. Klebeband nach Anspruch 6,
**dadurch gekennzeichnet, dass** der textile Träger ein Gewebe, ein Gewirk, ein Vlies oder ein daraus gebildeter Verbund ist.

8. Klebeband nach einem der Ansprüche 1 bis 7,
**dadurch gekennzeichnet, dass** der Träger vollständig aus einem Polyestergewebe, insbesondere aus PET (Polyethylenterephthalat), besteht.

9. Klebeband nach einem der Ansprüche 1 bis 7,
**dadurch gekennzeichnet, dass** der Träger vollständig aus einem Vlies, insbesondere aus einem Polyesternähvlies, besteht.

10. Klebeband nach einem der Ansprüche 1 bis 9,
**dadurch gekennzeichnet, dass** die selbstklebende Klebstoffschicht aus einem lösungsmittelbasierten Acrylat- oder Silikonsystem oder aus einem Schmelzklebstoff auf Basis von Kautschuk oder von Acrylaten, insbesondere UV-vernetzbaren Acrylaten, gebildet ist.

11. Klebeband nach einem der Ansprüche 1 bis 10,
**dadurch gekennzeichnet, dass** die Abriebfestigkeit nach LV 312 - verglichen mit einem Klebeband ohne Zwischenschicht, jedoch mit ansonsten identischem Aufbau - um mindestens eine Klasse höher liegt, wobei insbesondere die Anforderungen an das Flagging gemäß LV 312 gleichermaßen erfüllt sind.

12. Klebeband nach einem der Ansprüche 1 bis 11,
**dadurch gekennzeichnet, dass** der Träger auf beiden Seiten mit einer selbstklebenden Klebstoffschicht versehen ist, die aus einem druckempfindlichen Haftkleber besteht.

13. Klebeband nach einem der Ansprüche 1 bis 12,
**dadurch gekennzeichnet, dass** die Zwischenschicht und/oder die Deckschicht jeweils eine höhere Dichte aufweist als die selbstklebende Klebstoffschicht.

14. Klebeband nach einem der Ansprüche 1 bis 13,
**dadurch gekennzeichnet, dass** die Zwischenschicht und/oder die Deckschicht, insbesondere durch eine Kalandrierung, mechanisch verdichtet ist, so dass die Zwischenschicht und/oder die Deckschicht ausschließlich Mikroporen mit einer Porengröße < 2 nm aufweist, wobei die Porengröße als Äquivalent einer nach ISO 15496:2004-09 bestimmten Wasserdampfdurchlässigkeit bestimmt wird.

15. Klebeband nach einem der Ansprüche 1 bis 14,
**dadurch gekennzeichnet, dass** ein Feststoff-Masseverhältnis des Bindemittels zu den Teilchen in der Zwischenschicht und/oder in der Deckschicht im Bereich von 1 : 9 bis 7 : 3 liegt, insbesondere im Bereich von 2 : 3 bis 1 : 1.

## Claims

1. An adhesive tape, in particular a cable wrapping tape, comprising a carrier that is provided on at least one side with a self-adhesive adhesive layer consisting of a pressure-sensitive adhesive, wherein
an intermediate layer is arranged between the carrier and the self-adhesive adhesive layer and/or a cover layer is arranged on the side of the carrier facing away from the adhesive layer, said intermediate layer and/or cover layer comprising a binder in which particles having a mean particle size in the range of 0.005 µm to 30.0 µm (measured by means of Dynamic Light Scattering (DLS)) are incorporated,
**characterized in that** the intermediate layer and/or the cover layer is produced from a mechanically compressed microporous foam coating based on an aqueous dispersion of polyurethane, polyacrylic acid, an ethylene-vinyl acetate copolymer (EVA), a styrene-butadiene rubber (SBR) and/or an acrylonitrile-butadiene rubber (NBR) as a binder, and
the thickness of the intermediate layer and/or the cover layer is in the range of 50 µm to 450 µm.

2. The adhesive tape according to claim 1,
**characterized in that** the particles in the intermediate layer and/or in the cover layer have a mean size in the range of 0.01 µm to 20.00 µm, preferably in the range of 0.05 µm to 2.00 µm, particularly preferably below 200 nm.

3. The adhesive tape according to claim 1 or 2,
**characterized in that** the particle-filled binder of the intermediate layer and/or the cover layer is applied as a liquid, as a paste or as a foam by spreading, doctor blade coating or by nozzle application and subsequently dried and, preferably using additives such as isocyanates and/or melamine resins, crosslinked, wherein the moisture content in the intermediate layer and/or the cover layer is in particular at most 5% by mass, preferably 2% by mass to 3% by mass.

4. The adhesive tape according to any one of claims 1 to 3,
**characterized in that** the particles which form the filler of the layer are non-metallic, in particular ceramic particles, such as particles of titanium dioxide, kaolins, silicates, talc or chalks, or of a mixture of these materials, wherein the particles in particular have at least a Mohs hardness of 1, wherein an upper value of the Mohs hardness is preferably 6.

5. The adhesive tape according to any one of claims 1 to 4,
**characterized in that** the thickness of the intermediate layer and/or the cover layer is in the range of 90 µm to 130 µm.

6. The adhesive tape according to any one of claims 1 to 5,
**characterized in that** the carrier comprises a film, in particular consisting of plastic, or preferably a textile carrier or a combination thereof.

7. The adhesive tape according to claim 6,
**characterized in that** the textile carrier is a woven fabric, a knitted fabric, a nonwoven or a composite formed therefrom.

8. The adhesive tape according to any one of claims 1 to 7,
**characterized in that** the carrier consists entirely of a polyester woven fabric, in particular of PET (polyethylene terephthalate).

9. The adhesive tape according to any one of claims 1 to 7,
**characterized in that** the carrier consists entirely of a nonwoven, in particular of a polyester stitch-bonded nonwoven.

10. The adhesive tape according to any one of claims 1 to 9,
**characterized in that** the self-adhesive adhesive layer is formed from a solvent-based acrylate or silicone system or from a hot-melt adhesive based on rubber or on acrylates, in particular UV-crosslinkable acrylates.

11. The adhesive tape according to any one of claims 1 to 10,
**characterized in that** the abrasion resistance according to LV 312 - compared with an adhesive tape without an intermediate layer but with an otherwise identical construction - is at least one class higher, wherein in particular the requirements for flagging according to LV 312 are equally met.

12. The adhesive tape according to any one of claims 1 to 11,
**characterized in that** the carrier is provided on both sides with a self-adhesive adhesive layer consisting of a pressure-sensitive adhesive.

13. The adhesive tape according to any one of claims 1 to 12,
**characterized in that** the intermediate layer and/or the cover layer each has a higher density than the self-adhesive adhesive layer.

14. The adhesive tape according to any one of claims 1 to 13,
**characterized in that** the intermediate layer and/or the cover layer is mechanically densified, in particular by calendering, such that the intermediate layer and/or the cover layer has exclusively micropores with a pore size < 2 nm, wherein the pore size is determined as an equivalent of a water vapor permeability determined according to ISO 15496:2004-09.

15. The adhesive tape according to any one of claims 1 to 14,
**characterized in that** a solids mass ratio of the binder to the particles in the intermediate layer and/or in the cover layer is in the range of 1:9 to 7:3, in particular in the range of 2:3 to 1:1.

## Revendications

1. Ruban adhésif, notamment un ruban d'enroulement de câbles, comportant un support qui est pourvu sur au moins une face d'une couche adhésive auto-adhésive constituée d'un adhésif sensible à la pression,
une couche intermédiaire étant disposée entre le support et la couche adhésive auto-adhésive et/ou une couche de recouvrement étant disposée sur la face du support opposée à la couche adhésive, ladite couche intermédiaire et/ou ladite couche de recouvrement comprenant un liant dans lequel sont incorporées des particules d'une taille moyenne de particules comprise dans la plage de 0,005 µm à 30,0 µm (mesurée par diffusion dynamique de la lumière (DLS)),
**caractérisé en ce que** la couche intermédiaire et/ou la couche de recouvrement est fabriquée à partir d'un revêtement en mousse microporeuse mécaniquement comprimée à base d'une dispersion aqueuse de polyuréthane, d'acide polyacrylique, d'un copolymère éthylène-acétate de vinyle (EVA), d'un caoutchouc styrène-butadiène (SBR) et/ou d'un caoutchouc acrylonitrile-butadiène (NBR) en tant que liant, et
l'épaisseur de la couche intermédiaire et/ou de la couche de recouvrement est comprise dans la plage de 50 µm à 450 µm.

2. Ruban adhésif selon la revendication 1,
**caractérisé en ce que** les particules dans la couche intermédiaire et/ou dans la couche de recouvrement présentent une taille moyenne comprise dans la plage de 0,01 µm à 20,00 µm, de préférence dans la plage de 0,05 µm à 2,00 µm, de manière particulièrement préférée inférieure à 200 nm.

3. Ruban adhésif selon la revendication 1 ou 2,
**caractérisé en ce que** le liant chargé de particules de la couche intermédiaire et/ou de la couche de recouvrement est appliqué sous forme de liquide, de pâte ou de mousse par enduction, raclage ou application par buse, puis séché et réticulé, de préférence en utilisant des additifs tels que des isocyanates et/ou des résines mélamine, la teneur en humidité dans la couche intermédiaire et/ou la couche de recouvrement étant notamment d'au plus 5 % en masse, de préférence de 2 % en masse à 3 % en masse.

4. Ruban adhésif selon l'une des revendications 1 à 3,
**caractérisé en ce que** les particules qui forment la charge de la couche sont des particules non métalliques, notamment des particules céramiques, telles que des particules de dioxyde de titane, de kaolins, de silicates, de talc ou de craies, ou d'un mélange de ces matériaux, les particules présentant notamment une dureté Mohs d'au moins 1, une valeur supérieure de la dureté Mohs étant de préférence de 6.

5. Ruban adhésif selon l'une des revendications 1 à 4,
**caractérisé en ce que** l'épaisseur de la couche intermédiaire et/ou de la couche de recouvrement est comprise dans la plage de 90 µm à 130 µm.

6. Ruban adhésif selon l'une des revendications 1 à 5,
**caractérisé en ce que** le support comprend un film, notamment constitué de matière plastique, ou de préférence un support textile, ou une combinaison de ceux-ci.

7. Ruban adhésif selon la revendication 6,
**caractérisé en ce que** le support textile est un tissu, un tricot, un non-tissé ou un composite formé à partir de ceux-ci.

8. Ruban adhésif selon l'une des revendications 1 à 7,
**caractérisé en ce que** le support est entièrement constitué d'un tissu de polyester, notamment de PET (polyéthylène téréphtalate).

9. Ruban adhésif selon l'une des revendications 1 à 7,
**caractérisé en ce que** le support est entièrement constitué d'un non-tissé, notamment d'un non-tissé cousu en polyester.

10. Ruban adhésif selon l'une des revendications 1 à 9,
**caractérisé en ce que** la couche adhésive auto-adhésive est formée d'un système à base d'acrylate ou de silicone en solution ou d'un adhésif thermofusible à base de caoutchouc ou d'acrylates, notamment d'acrylates réticulables aux UV.

11. Ruban adhésif selon l'une des revendications 1 à 10,
**caractérisé en ce que** la résistance à l'abrasion selon LV 312 - comparée à un ruban adhésif sans couche intermédiaire mais avec une structure par ailleurs identique - est supérieure d'au moins une classe, les exigences relatives au flagging selon LV 312 étant notamment également satisfaites.

12. Ruban adhésif selon l'une des revendications 1 à 11,
**caractérisé en ce que** le support est pourvu sur les deux faces d'une couche adhésive auto-adhésive constituée d'un adhésif sensible à la pression.

13. Ruban adhésif selon l'une des revendications 1 à 12,
**caractérisé en ce que** la couche intermédiaire et/ou la couche de recouvrement présente respectivement une densité supérieure à celle de la couche adhésive auto-adhésive.

14. Ruban adhésif selon l'une des revendications 1 à 13,
**caractérisé en ce que** la couche intermédiaire et/ou la couche de recouvrement est densifiée mécaniquement, notamment par calandrage, de sorte que la couche intermédiaire et/ou la couche de recouvrement présente exclusivement des micropores d'une taille de pore < 2 nm, la taille de pore étant déterminée comme équivalent d'une perméabilité à la vapeur d'eau déterminée selon ISO 15496:2004-09.

15. Ruban adhésif selon l'une des revendications 1 à 14,
**caractérisé en ce que** un rapport massique de matière solide du liant aux particules dans la couche intermédiaire et/ou dans la couche de recouvrement est compris dans la plage de 1 : 9 à 7 : 3, notamment dans la plage de 2 : 3 à 1 : 1.
